# EUROPEAN PATENT SPECIFICATION

(11) **EP 0 612 630 B1**
(45) Date of publication and mention of the grant of the patent: **14.05.1997**
(21) Application number: 94102412.7
(22) Date of filing: 17.02.1994
(51) Int. Cl.: B60B 33/08

(54) **Ball support**
Kugelhalter
Support de balle

(30) Priority: 24.02.1993 IT LU930001 U
(43) Date of publication of application: 31.08.1994
(73) Proprietor: Marraccini, Marco, I-55049 Viareggio (Lu) (IT)
(72) Inventor: Marraccini, Marco, I-55049 Viareggio (Lu) (IT)
(74) Representative: La Ciura, Salvatore

(56) References cited:
- DE-A- 1 926 180
- GB-A- 264 298
- PATENT ABSTRACTS OF JAPAN vol. 9, no. 164 (M-395) (1887) 10 July 1985 & JP-A-60 038 204 (HITACHI SEISAKUSHO) 27 February 1985

## Description

The present invention proposes a support in which houses a ball that acts as a wheel; this support allows to easily move a load with translation, angular motion or both.

Several different types of wheels are known, applied to objects which necessitate to be translated and/or to be rotated, such as handtrucks, chairs, or white goods.

Generally these are wheels having a substantially horizontal pivot which are mounted on a fork hinged to a vertical pivot which is applied to the object to be moved.

The two pivots are misaligned and this allow the changing of the movement direction.

This system shows some drawbacks, particularly when several wheels are applied to the mobile object.

Actually hardly all the wheel are oriented on the same direction, as a consequence, when the movement direction is to be changed very quickly several difficulties are met.

In other cases, on the contrary, the wheel comprises a ball housed inside a seating which covers it partially, but the friction between the ball and the seating make it hardly usable.

DE-A-1 926 180 discloses, a support with ball (1) for moving loads, of the type comprising a hollow body (2) to which the load is applied and in which a ball (1) is housed, partially coming out from the lower part of said hollow body (2) and free to rotate by means of a rolling means (3) which are assembled inside said hollow body (2) and engage the surface of the ball (1), wherein said rolling means (3) is positioned on the upper side of the ball (1) and is mounted on a support able to freely pivot around a vertical axis passing through the ball center.

The present invention proposes a ball support according to the features of claim 1.

The support, according to the invention, provides a plurality of wheels, opportunely arranged inside the support, which allow the ball to freely rotate, thus avoiding the abovementioned drawbacks.

The present invention will be further described, with reference to the accompanying drawings, in which:
Fig.1 is a cross-sectional view of the device according to the invention;
Fig.2 is a low sectional view of said device.

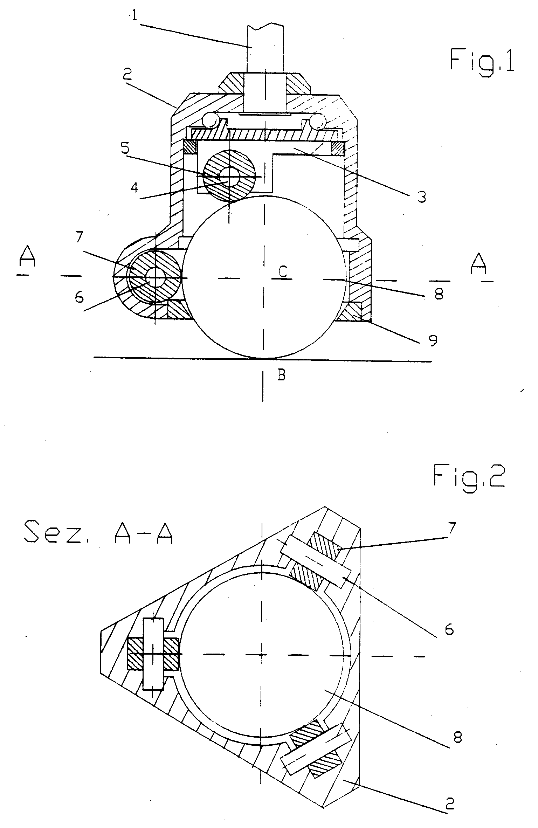

The support is a hollow body which is integral with an upstanding member 1 which is attached to a mobile object.

In the upper side of the cavity of said hollow body a fork 3, whose axis is alligned with ball centre 8 and with the contact point B, is provided.

A wheel 5 is applied to the fork 3, by means of a pivot 4.

The support 2 contains a plurality of wheels 7 which idle on as many pivots 6.

The wheels 5 and 7 form as many rests for the ball 8 and center it inside the support 2, the ring 9, slightly spaced from the ball 8 hold it in the support.

The axis of the pivots 4 and 6 are misaligned of 90° relative to fork 3 axis.

The above mentioned ball support, being integral with the moved load allows the ball 8 to rotate on the bearing surface and therefore to move the load in all the direction.

When the ball 8 change the rolling direction the fork 3 pivots around his own axis and allignes itself, together with the wheel 5, with the rolling direction of ball 8, while the wheels 7 hold the ball 8 at the center of support 2, and rotate on the surface of said ball.

The above mentioned ball support is more practical if compared with similar devices already in use.

While the invention has been set forth according to particular features which describe the preferred embodiment, the description herein is intended to be illustrative and not restrictive.

It will be recognized that many modifications of the invention can be made without departing from the scope of the invention as defined in the appended claims.

## Claims

1. A support with ball for moving loads, of the type comprising a hollow body (2) to which the load is applied and in which a ball (8) is housed, partially coming out from the lower part of said hollow body and free to rotate by means of an idle wheel (5) positioned on the upper side of the ball and mounted on a support formed as a fork (3) able to freely pivot around a vertical axis passing through the ball center, characterized in that the support provides also at least three coplanar idle wheels (7) and in that the pivot axes (6) of said three coplanar idle wheels (7) are misaligned of 90° relative to the pivot axis of the fork (3), so that said wheels (7) rotate on the ball surface forcing the ball (8) to remain centered in the cavity of the support.

## Patentansprüche

1. Kugelhalter zum Bewegen von Lasten in der Ausführung mit einem Hohlkörper (2), auf dem die Last ausgeübt wird und in dem eine Kugel (8) untergebracht ist, die zum Teil aus dem unteren Bereich dieses Hohlkörpers herausragt und mittels eines Zwischenrades (5) frei rotieren kann, das an der Oberseite der Kugel angeordnet und an einem gabelförmigen Halter (3) montiert ist und sich frei um eine vertikale durch das Kugelzentrum verlaufende Achse drehen kann, dadurch gekennzeichnet, daß der Halter auch wenigstens drei koplanare Zwischenräder (7) aufweist und daß die Drehachsen (6) dieser drei koplanaren Zwischenräder (7) um 9o° relativ zur Drehachse der Gabel (3) versetzt sind, so daß diese an der Kugeloberfläche rotierenden Räder (7) die Kugel (8) zwingen, zentriert im Hohlraum des Halters zu verbleiben.

## Revendications

1. Support avec une bille pour déplacer des charges, du type comprenant un corps creux (2) auquel on applique la charge et dans lequel est logée une bille (8), sortant partiellement de la partie inférieure dudit corps creux et étant libre de tourner au moyen d'une roue intermédiaire (5) positionnée sur le côté supérieur de la bille et monté sur un support formé comme une fourche (3) pouvant pivoter librement autour d'un axe vertical passant au centre de la bille, caractérisé en ce que le support fournit également au moins trois roues intermédiaires (7) coplanaires et en ce que les axes de pivot (6) desdites trois roues intermédiaires (7) coplanaires sont décalés de 90° par rapport à l'axe de pivot de la fourche (3), de telle sorte que lesdites roues (7) tournent sur la surface de la bille, forçant la bille (8) à rester centrée dans la cavité du support.
